# FASCICULE DE BREVET EUROPEEN

(11) **EP 3 728 162 B1**
(45) Date de publication et mention de la délivrance du brevet: **23.11.2022**
(21) Numéro de dépôt: 18839841.6
(22) Date de dépôt: 20.12.2018
(51) Int. Cl.: C04B 35/565, C04B 35/573, C04B 35/58, C04B 35/628, C04B 35/65, C04B 35/80, C04B 35/645

(54) **PROCEDE DE FABRICATION D'UNE PIECE EN MATERIAU COMPOSITE A MATRICE CERAMIQUE**
VERFAHREN ZUR HERSTELLUNG EINES VERBUNDTEILS MIT EINER KERAMIKMATRIX
PROCESS FOR THE MANUFACTURE OF A CERAMIC MATRIX COMPOSITE PART

(30) Priorité: 22.12.2017 FR 1763017
(43) Date de publication de la demande: 28.10.2020
(73) Titulaire: Safran Ceramics, 33185 Le Haillan (FR); Centre National de la Recherche Scientifique, 75016 Paris (FR); Université de Bordeaux, 33000 Bordeaux (FR)
(72) Inventeur: DELEHOUZE, Arnaud, 77550 MOISSY-CRAMAYEL (FR); BOUILLON, Eric, 77550 MOISSY-CRAMAYEL (FR); LEPETITCORPS, Yann, 77550 MOISSY-CRAMAYEL (FR)
(74) Mandataire: Cabinet Beau de Loménie
(86) Numéro de dépôt international: PCT/FR2018/053475
(87) Numéro de publication internationale: WO 2019/122760

(56) Documents cités:
- EP-A1- 0 519 644
- EP-A1- 3 395 564
- DE-A1- 19 820 832
- US-A1- 2002 165 304
- US-A1- 2014 072 710
- MARCHAIS A ET AL: "Capillary infiltration of hexadecane in packed SiC powder and in SiC/SiC preforms: Pore description and calculation of molten Si infiltration", CERAMICS INTERNATIONAL, ELSEVIER, AMSTERDAM, NL, vol. 42, no. 6, 12 février 2016 (2016-02-12), pages 7774-7780, XP029461743, ISSN: 0272-8842, DOI: 10.1016/J.CERAMINT.2016.01.203

## Description

### Arrière-plan de l'invention

La présente invention se rapporte au domaine général des procédés de fabrication de pièces en matériau composite à matrice céramique.

Les matériaux composites à matrice céramique (CMC), connus pour leurs bonnes propriétés mécaniques qui les rendent aptes à constituer des éléments de structures et pour conserver ces propriétés à températures élevées, constituent une alternative viable aux traditionnelles pièces métalliques. Leur masse réduite par rapport à leur équivalent métallique en font des pièces de choix pour répondre aux problématiques d'augmentation du rendement et de réduction des émissions polluantes des moteurs dans le domaine aéronautique.

Les pièces en matériau CMC peuvent comprendre un renfort fibreux généralement continu sous la forme d'un textile tissé, qui est densifié par une matrice céramique. Le renfort fibreux comprend ainsi des fibres longues continues, dont l'orientation peut être adaptée aux directions principales de sollicitation de la pièce lors de son utilisation. La préforme destinée à former le renfort fibreux est tissée à partir des fibres continues aux dimensions de la pièce (par exemple par tissage bidimensionnel ou tridimensionnel), à l'aide d'un métier à tisser adapté. L'étape de tissage est un processus long et coûteux, et qui n'est pas optimal pour réaliser des pièces de petite taille.

On connaît de EP 0 519 644 A1 des pièces en CMC comprenant des fibres courtes de C ou SiC recouvertes d'une couche de nitrure et obtenue par préparation d'un mélange comprenant les fibres recouvertes d'une interphase, un matériau carboné qui peut comprendre SiC, MoSi₂ ou TiSi₂, et un liant (par exemple une résine époxy) ; mise en forme par moulage par injection ou compression isostatique ; déliantage ; et infiltration avec du Si fondu.

Il existe donc un besoin pour un procédé de fabrication d'une pièce en matériau composite à matrice céramique qui soit plus aisé à mettre en œuvre et moins couteux pour fabriquer des pièces de petite taille.

### Objet et résumé de l'invention

La présente invention a donc pour but principal de pallier de tels inconvénients en proposant un procédé de fabrication d'une pièce en matériau composite comprenant un renfort particulaire densifié par une matrice céramique, le procédé comprenant les étapes suivantes :
- formation d'une ébauche de la pièce à fabriquer par mise en forme d'un mélange comprenant un liant, des premières particules en céramique ou en carbone destinées à former le renfort particulaire de la pièce et des deuxièmes particules céramiques ou carbone distinctes des premières particules,
- élimination ou pyrolyse du liant présent dans l'ébauche afin d'obtenir une préforme poreuse de la pièce à fabriquer, et
- infiltration de la porosité de la préforme par une composition fondue comprenant un métal afin d'obtenir la pièce,
caractérisé en ce que ledit procédé comprend en outre, avant l'étape d'infiltration, une étape de compression isostatique à chaud de la préforme poreuse obtenue après élimination ou pyrolyse du liant.

Le procédé selon l'invention permet ainsi de réaliser une pièce en matériau CMC par un procédé d'infiltration à l'état fondu (« Melt Infiltration ») sans renfort fibreux tissé. Grâce à une étape de mise en forme du mélange chargé des premières particules et des deuxièmes particules puis de l'obtention de la préforme poreuse par élimination ou pyrolyse du liant, le procédé selon l'invention permet de s'affranchir de l'étape de tissage du renfort fibreux. Ceci est avantageux notamment pour fabriquer des pièces de petite taille qui ne sont pas fortement sollicitées thermo-mécaniquement, ce qui représente des gains en termes de temps de fabrication et de coûts. Il est également possible d'obtenir des pièces à partir du procédé selon l'invention qui présentent des formes complexes, et les dimensions voulues sans nécessiter d'usinage supplémentaire.

Le mélange peut être homogène et intime entre le liant et les particules.

Dans un exemple de réalisation, la composition fondue peut comprendre un composé intermétallique. Dans un exemple de réalisation, la composition fondue peut comprendre du silicium.

La composition fondue peut être constituée de silicium pur fondu ou en variante être sous la forme d'un alliage fondu de silicium et d'un ou plusieurs autres constituants. La composition fondue peut comprendre majoritairement en masse du silicium, c'est-à-dire présenter une teneur massique en silicium supérieure ou égale à 50%. La composition fondue peut par exemple présenter une teneur massique en silicium supérieure ou égale à 75%. Le(s) constituant(s) présent(s) au sein de l'alliage de silicium peuvent être choisi(s) parmi B, Al, Mo, Ti, et leurs mélanges. En particulier, la composition fondue peut comprendre du disiliciure de molybdène (MoSi₂). Une réaction chimique peut se produire entre la composition fondue et du carbone présent dans la préforme poreuse (par exemple un résidu de pyrolyse) lors de l'infiltration, aboutissant à la formation de carbure de silicium (procédé d'infiltration réactive à l'état fondu ou « Reactive Melt Infiltration »).

Dans un exemple de réalisation, le mélange peut être chauffé pour fluidifier le liant et faciliter l'étape de mise en forme en vue de former l'ébauche. Le mélange peut également être soumis à du vide pour retirer les éventuelles bulles d'air présentes dans le mélange préalablement à sa mise en forme. L'ébauche peut présenter des dimensions supérieures ou égales à celles de la pièce finale afin de laisser subsister un réseau poral à l'intérieur de l'ébauche après élimination ou pyrolyse du liant. L'étape d'élimination ou de pyrolyse du liant (aussi appelée « déliantage ») peut être préférentiellement réalisée sous gaz inerte, par exemple sous argon, pour éviter une oxydation de l'ébauche qui réduirait la tenue mécanique de l'ébauche entre les différentes étapes de traitement aboutissant à la pièce finale. Dans la suite, lorsqu'il est fait mention de l'étape « d'élimination du liant », on entend toujours l'étape « d'élimination ou pyrolyse du liant », la pyrolyse consistant en une élimination du liant laissant des résidus.

Dans un exemple de réalisation, les premières particules peuvent être des fibres courtes. En d'autres termes, les premières particules peuvent présenter une forme généralement cylindrique.

Dans un exemple de réalisation, les fibres courtes peuvent présenter préférentiellement une longueur comprise entre 50 µm et 5000 µm, ou plus préférentiellement les fibres courtes peuvent présenter une longueur comprise entre 100 µm et 300 µm.

Dans un exemple de réalisation, les fibres courtes peuvent être obtenues à partir de fibres longues par découpe mécanique ou broyage.

Dans un exemple de réalisation, les premières particules peuvent être des grains. En d'autres termes, les premières particules peuvent présenter une forme sphérique ou ellipsoïdale. Dans ce cas, la taille moyenne (D50) des premières particules peut être comprise entre 10 µm et 300 µm, plus préférentiellement entre 40 µm et 100 µm.

Dans un exemple de réalisation, le volume élémentaire médian des premières particules peut être supérieur ou égal au volume élémentaire médian des deuxièmes particules. Le volume élémentaire d'une particule est le volume occupé par la particule.

Dans un exemple de réalisation, la mise en forme du mélange peut comprendre l'injection du mélange dans un moule.

Dans un exemple de réalisation, le liant peut comprendre au moins un polymère thermoplastique. Par exemple, le liant peut comprendre au moins un composé choisi parmi les suivants : alcool polyvinylique (PVA), polyéthylène glycol (PEG), polypropylène (PP), polyoxyméthylène (POM), polytéréphtalate d'éthylène (PET).

Dans un exemple de réalisation, le liant peut comprendre au moins un polymère thermodurcissable. Par exemple, le liant peut comprendre au moins un composé choisi parmi les suivants : résines époxydes, résines phénoliques, résines pré-céramiques.

Dans un exemple de réalisation, le mélange peut comprendre deux liants éliminables thermiquement présentant chacun une température d'élimination différente. Ainsi, l'étape d'élimination des liants peut comprendre deux sous-étapes d'élimination thermique de chacun des liants à deux températures différentes.

Dans un exemple de réalisation, le mélange peut comprendre un premier liant éliminable par dissolution et un deuxième liant éliminable thermiquement. Ainsi, l'étape d'élimination des liants peut comprendre deux sous-étapes d'élimination : l'élimination par dissolution du premier liant, puis l'élimination thermique du deuxième liant. Cette disposition est avantageuse car elle permet une élimination plus efficace du deuxième liant en ouvrant une porosité dans l'ébauche après l'élimination par dissolution du premier liant.

Dans un exemple de réalisation, un milieu liquide comprenant le mélange peut être injecté dans le moule, le moule pouvant être équipé d'un dispositif de filtration du milieu liquide, et l'étape de formation de l'ébauche peut comprendre en outre la filtration du milieu liquide par le dispositif de filtration. Le milieu liquide peut être un milieu aqueux, ou comprendre par exemple un alcool.

Dans un exemple de réalisation, la mise en forme du mélange peut comprendre l'application d'une pression sur le mélange. Dans ce cas, le liant comprend un plastifiant afin d'améliorer la compaction du mélange. Un tel plastifiant peut être de l'acide stéarique. Dans ce cas, la mise en forme du mélange peut comprendre la compression isostatique à froid du mélange dans un moule.

Le procédé comprend, avant l'étape d'infiltration, la compression isostatique de la préforme poreuse obtenue après élimination ou pyrolyse du liant. Cette étape de compression isostatique est réalisée à chaud .

Cette étape de compression isostatique permet de refermer en partie la porosité générée par l'étape d'élimination ou pyrolyse du liant afin de contrôler cette porosité et de facilité l'étape ultérieure d'infiltration.

Il est en outre possible de réaliser, avant l'étape d'infiltration, un traitement thermique de frittage libre (c'est-à-dire sans contraintes) de l'ébauche déliantée, toujours afin de contrôler la porosité de l'ébauche déliantée. Ce traitement thermique de frittage libre peut être réalisé après une étape de compression isostatique à froid et avant une étape de compression isostatique à chaud.

Dans un exemple de réalisation, les premières particules peuvent être en carbure de silicium. Lorsqu'il s'agit de fibres courtes, elles peuvent alors comprendre une teneur en oxygène inférieure ou égale à 1% en pourcentage atomique. Par exemple de telles fibres courtes peuvent être des fibres du type Hi-Nicalon type S commercialisées par la société japonaise NGS. En variante, les fibres courtes peuvent être en un matériau choisi parmi les suivants : carbone, un oxyde, par exemple de l'alumine (Al₂O₃).

Dans un exemple de réalisation, les premières particules peuvent être revêtues d'une interphase. Une telle interphase peut par exemple être en carbone pyrolytique (PyC), en nitrure de bore (BN) ou en carbure de silicium (SiC). L'interphase peut comprendre plusieurs couches comprenant chacune un matériau différent. L'interphase a une fonction de défragilisation du matériau composite qui favorise la déviation de fissures éventuelles parvenant à l'interphase après s'être propagées dans la matrice, empêchant ou retardant la rupture du renfort par de telles fissures. Cette interphase permet également de protéger les premières particules du matériau de la matrice lors de sa formation.

Cette interphase peut être déposée sur les premières particules avant leur introduction dans le mélange. Dans le cas des fibres courtes, le dépôt de l'interphase peut être réalisé sur des fibres longues avant leur découpe ou broyage. Le dépôt de l'interphase peut être réalisé directement sur les fibres courtes par un procédé de dépôt chimique en phase vapeur (CVD) ou par un procédé de dépôt électrolytique ou encore par sel fondus. On peut également déposer, à la place de l'interphase ou sur l'interphase, un revêtement céramique compatible avec le matériau de la matrice à former.

Dans un exemple de réalisation, les deuxièmes particules céramiques peuvent comprendre un matériau choisi parmi les suivants : SiC, MoSi₂, TiSi₂, CoSi₂, ZrSi₂, HfSi₂, ZrB₂, HfB₂, TiB₂, et leur mélange.

Dans un exemple de réalisation, la teneur volumique en premières particules dans la pièce peut être compris entre 10 % et 70 %, préférentiellement entre 25 % et 50%.

Dans un exemple de réalisation, la teneur volumique en deuxièmes particules dans la pièce peut être compris entre 30 % et 90 %, préférentiellement entre 50 % et 75%.

Dans un exemple de réalisation, les deuxièmes particules peuvent présenter une taille moyenne (D50) comprise entre 0,5 µm et 200 µm, plus préférentiellement comprise entre 0,7 µm et 75 µm.

### Brève description des dessins

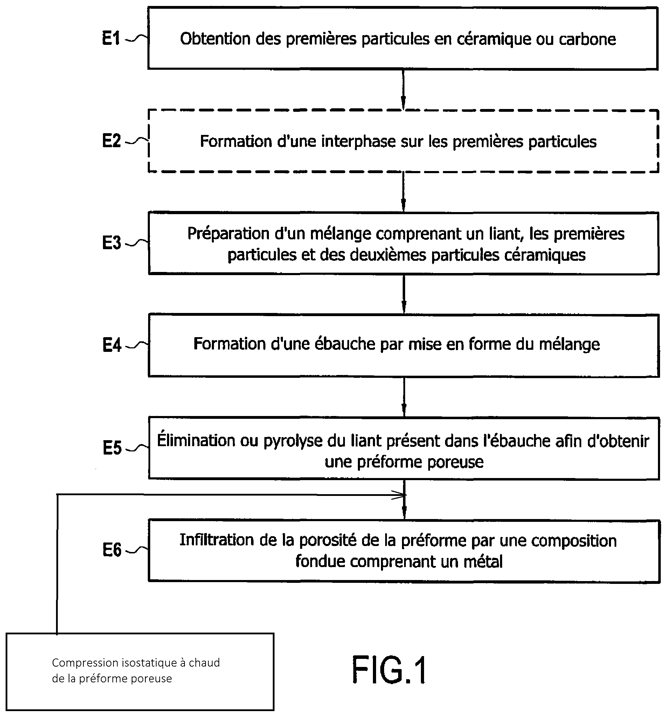

D'autres caractéristiques et avantages de la présente invention ressortiront de la description faite ci-dessous, en référence au dessin annexé qui en illustre un exemple de réalisation dépourvu de tout caractère limitatif. La figure 1 est un ordinogramme montrant les différentes étapes d'un procédé selon un mode de réalisation de l'invention.

### Description détaillée de l'invention

Les étapes d'un procédé selon un mode de réalisation de l'invention vont à présent être décrites en lien avec l'ordinogramme de la figure 1. On cherche ici à obtenir une pièce en matériau composite à matrice céramique. Une telle pièce peut être une pièce pour l'aéronautique, par exemple une pièce destinée à être utilisée dans une turbomachine aéronautique. Une telle pièce peut être par exemple une aube de petite taille.

Dans une étape E1 on peut obtenir les premières particules en céramique ou carbone qui seront destinées à former le renfort particulaire (par exemple fibreux) de la pièce à fabriquer. Lorsque les premières particules sont des fibres courtes, elles peuvent être obtenues par broyage ou découpe mécanique de fibres longues, de façon connue en soi. Les fibres courtes peuvent présenter une longueur médiane comprise entre 50 µm et 5000 µm, ou encore comprise entre 100 µm et 300 µm. Il n'est pas obligatoire que la distribution de taille des premières particules soit monodisperse, elle peut en effet être polydisperse.

On peut éventuellement revêtir les premières particules d'un revêtement d'interphase (étape E2). Dans le cas de fibres courtes, on peut les revêtir soit directement, soit en revêtant des fibres longues préalablement à leur découpe ou broyage. L'épaisseur de l'interphase peut par exemple être comprise entre 10 nm et 1000 nm, et par exemple entre 10 nm et 500 nm. L'interphase peut être monocouche ou multicouches. L'interphase peut comporter au moins une couche de carbone pyrolytique (PyC), de nitrure de bore (BN), de nitrure de bore dopé au silicium (BN(Si), avec du silicium en une proportion massique comprise entre 5% et 40%, le complément étant du nitrure de bore) ou de carbone dopé au bore (BC, avec du bore en une proportion atomique comprise entre 5% et 20%, le complément étant du carbone). Le dépôt de l'interphase peut être réalisé directement sur les fibres courtes par un procédé de CVD ou par un procédé de dépôt électrolytique ou encore par sel fondus. L'interphase a ici une fonction de défragilisation du matériau composite qui favorise la déviation de fissures éventuelles parvenant à l'interphase après s'être propagées dans la matrice, empêchant ou retardant la rupture du renfort par de telles fissures. L'interphase peut aussi protéger le renfort au cours de l'étape ultérieure de formation de la matrice. On peut également déposer, à la place de l'interphase ou sur l'interphase, un revêtement céramique compatible avec le matériau de la matrice à former, par exemple par CVI.

Dans une étape E3, on peut ensuite préparer un mélange comprenant un liant, les premières particules en céramique ou carbone et des deuxièmes particules céramiques destinées à former la matrice de la pièce. Le liant peut par exemple comprendre un polymère, tel qu'une résine thermoplastique ou thermodurcissable, ou un plastifiant. Le mélange peut comprendre plusieurs liants. Il peut être avantageux de chauffer le mélange afin de fluidifier le liant pour faciliter le mélange et permettre une meilleure homogénéisation. Cette température de mélange dépend alors des liants organiques employés afin d'une part, de ne pas les dégrader thermiquement et d'autre part, de ne pas les polymériser prématurément. On peut également préparer le mélange sous vide de façon à réduire la présence de bulles d'air dans le mélange. Le mélange ainsi préparé peut être par exemple mis sous la forme de granules destinées à être utilisés ultérieurement, ou être directement injecté au cours de l'étape suivante.

Dans une étape E4, on forme une ébauche de la pièce à fabriquer par mise en forme du mélange préparé à l'étape E3. Plusieurs manières de réaliser cette étape vont être décrites ci-après.

Selon une première variante, l'étape de mise en forme peut être réalisée par injection du mélange dans la cavité d'un moule. La cavité du moule utilisé pour l'injection peut présenter des dimensions supérieures à celles de la pièce finale car un réseau poral est nécessaire pour réaliser efficacement l'étape d'infiltration (étape E6). Le moule peut comprendre des buses d'injection dont les dimensions sont adaptées, de façon connue, à la taille des premières et deuxièmes particules, ainsi qu'au liant et aux pression et température d'injection choisies. Le moule peut être régulé en température afin de contrôler l'éventuelle solidification du liant après l'injection, le cas échéant. Cette régulation peut également permettre de ne pas orienter préférentiellement les premières particules lorsqu'elles correspondent à des fibres courtes aux abords de la paroi du moule. L'injection peut être réalisée avec un mélange préalablement porté à une température permettant de fluidifier le liant. L'injection peut être réalisée à une pression comprise entre 50 bars et 3000 bars. Une fois le mélange injecté dans le moule et l'ébauche moulée, l'ébauche peut être démoulée. L'ébauche ainsi obtenue est dans un état « vert » ou plastique. L'ébauche peut présenter généralement des dimensions supérieures à celles de la pièce finale, comme expliqué plus haut.

Selon une deuxième variante, le moule peut être équipé d'un dispositif de filtration et un milieu liquide comprenant le mélange des premières et secondes particules dispersées dans le milieu liquide est injecté dans le moule, et l'étape E4 de formation de l'ébauche comprend en outre la filtration du milieu liquide par le dispositif de filtration. Le milieu liquide peut être un milieu aqueux ou comprendre de l'alcool. Le milieu liquide peut comprendre préférentiellement de l'alcool polyvinylique (PVA). Il peut constituer une barbotine. Lors de l'injection/filtration, les premières et les deuxièmes particules sont retenues à l'intérieur du moule à l'aide du dispositif de filtration et forment progressivement l'ébauche.

Selon une troisième variante, le liant peut comprendre un plastifiant et l'étape de mise en forme du liant comprend l'application d'une pression sur le mélange, par exemple la compression isostatique à froid du mélange. Le plastifiant permettant de favoriser la compaction peut être de l'acide stéarique. Le mélange peut ainsi être disposé directement dans un moule et une pression peut être appliquée sur le mélange par le moule pour mettre en forme le mélange.

Dans une étape E5, on élimine ou on pyrolyse le liant présent dans l'ébauche afin d'obtenir une ébauche déliantée. Les conditions de l'étape E5 d'élimination ou de pyrolyse du liant dépendent généralement de la nature du liant à éliminer, de façon connue en soi. En particulier, certains liants sont éliminables thermiquement, c'est-à-dire que la température permet de les décomposer et/ou les évaporer, d'autres sont éliminables chimiquement, par exemple par dissolution dans un solvant approprié. L'étape E5 peut comprendre une pyrolyse, il peut alors rester des résidus de pyrolyse au sein de l'ébauche déliantée. L'étape E5 peut être réalisée sous atmosphère neutre, par exemple sous argon, afin de conserver jusqu'à la fin de l'étape d'élimination un squelette carbone dans l'ébauche garantissant une meilleure tenue de l'ébauche, mais aussi de réduire les risques d'oxydation de l'ébauche.

Il peut être avantageux d'utiliser plusieurs liants, par exemple deux liants éliminables en deux étapes d'élimination distinctes. Selon un exemple, on élimine d'abord un premier liant par dissolution, puis on élimine un deuxième liant thermiquement. Selon un autre exemple, un premier liant peut être éliminé thermiquement à une première température d'élimination, et un deuxième liant peut être éliminé thermiquement à une deuxième température d'élimination supérieure à la première température d'élimination. L'élimination des deux liants de façon successive réduit les risques de fissuration de l'ébauche au cours de l'étape E5 en ouvrant, après l'élimination du premier liant, une porosité dans l'ébauche par laquelle le deuxième liant pourra être extrait de l'ébauche. Les dimensions de l'ébauche ne varient généralement pas suite à l'étape E5 de déliantage. L'ébauche déliantée ou préforme poreuse comprend ainsi les premières particules et les deuxièmes particules, et présente une porosité non nulle qui était occupée préalablement par du liant.

Puis, dans une étape E6, on infiltre la porosité de la préforme par une composition fondue comprenant un métal, par exemple un composé intermétallique ou du silicium, afin d'obtenir la pièce. Cette étape d'infiltration correspond à une étape d'infiltration à l'état fondu (procédé MI ou RMI). La composition fondue ou composition d'infiltration peut être constituée de silicium pur fondu ou en variante être sous la forme d'un alliage fondu de silicium et d'un ou plusieurs autres constituants. Après l'étape E6, on obtient la pièce en matériau CMC.

On réalise une étape de compression isostatique à chaud de la préforme poreuse après l'étape E5 d'élimination ou de pyrolyse du liant présent dans l'ébauche et avant l'étape E6 d'infiltration afin de refermer une partie de la porosité dans le cas où celle-ci serait trop importante avant l'étape E6. Cette étape de compression isostatique à chaud est de préférence réalisée sous enveloppe, pour assurer une compaction homogène de la préforme poreuse. La pression appliquée est de préférence comprise entre 1000 bars et 2000 bars. L'enveloppe peut comprendre du graphite et du nitrure de bore. Cette étape peut permettre de réduire la porosité de l'ébauche déliantée, comprise généralement entre 30% et 40%, à une porosité de l'ordre de 10% par exemple, de façon à garder un réseau poral connecté suffisant et disposer d'une porosité assurant une meilleure montée capillaire du métal fondu dans la préforme. En outre, cette étape de compression isostatique à chaud réalisée avant l'infiltration permet de réduire le volume de métal liquide qui peut réagir pendant l'infiltration avec le renfort, ce qui permet de protéger le renfort en réduisant le risque de dissolution de ce dernier par le métal liquide. L'étape de compression isostatique à chaud peut être réalisée à une température comprise entre 1000°C et 1600°C, selon le matériau de matrice visé. Pour une matrice de disiliciure de titane, la température peut être comprise par exemple entre 1100°C et 1500°C.

## Revendications

1. Procédé de fabrication d'une pièce en matériau composite comprenant un renfort particulaire densifié par une matrice céramique, le procédé comprenant les étapes suivantes :
- formation d'une ébauche (E4) de la pièce à fabriquer par mise en forme d'un mélange comprenant un liant, des premières particules en céramique ou en carbone destinées à former le renfort particulaire de la pièce et des deuxièmes particules céramiques ou carbone distinctes des premières particules,
- élimination ou pyrolyse du liant (E5) présent dans l'ébauche afin d'obtenir une préforme poreuse de la pièce à fabriquer, et
- infiltration de la porosité de la préforme (E6) par une composition fondue comprenant un métal afin d'obtenir la pièce,
**caractérisé en ce qu'**il comprend en outre, avant l'étape d'infiltration, une étape de compression isostatique à chaud de la préforme poreuse obtenue après élimination ou pyrolyse du liant.

2. Procédé selon la revendication 1, dans lequel la composition fondue comprend du silicium.

3. Procédé selon la revendication 1 ou 2, dans lequel les premières particules sont des fibres courtes présentant une longueur comprise entre 50 µm et 5000 µm.

4. Procédé selon la revendication 3, dans lequel les fibres courtes présentent une longueur comprise entre 100 µm et 300 µm.

5. Procédé selon la revendication 1 ou 2, dans lequel les premières particules sont des grains.

6. Procédé selon l'une quelconque des revendications 1 à 5, dans lequel le volume élémentaire médian des premières particules est supérieur ou égal au volume élémentaire médian des deuxièmes particules.

7. Procédé selon l'une quelconque des revendications 1 à 6, dans lequel la mise en forme du mélange comprend l'injection du mélange dans un moule.

8. Procédé selon la revendication 7, dans lequel un milieu liquide comprenant le mélange est injecté dans le moule, le moule étant équipé d'un dispositif de filtration du milieu liquide, et l'étape de formation de l'ébauche comprend en outre la filtration du milieu liquide par le dispositif de filtration.

9. Procédé selon l'une quelconque des revendications 1 à 6, dans lequel la mise en forme du mélange comprend l'application d'une pression sur le mélange.

10. Procédé selon la revendication 9, dans lequel la mise en forme du mélange comprend la compression isostatique à froid du mélange dans un moule.

11. Procédé selon l'une quelconque des revendications 1 à 10, dans lequel les premières particules sont en carbure de silicium.

12. Procédé selon l'une quelconque des revendications 1 à 11, dans lequel les premières particules sont revêtues d'une interphase.

13. Procédé selon l'une quelconque des revendications 1 à 12, dans lequel les deuxièmes particules céramiques comprennent un matériau choisi parmi les suivants : SiC, MoSi₂, TiSi₂, CoSi₂, ZrSi₂, HfSi₂, ZrB₂, HfB₂, TiB₂, et leur mélange.

14. Procédé selon l'une quelconque des revendications 1 à 13, dans lequel la teneur volumique en premières particules dans la pièce est compris entre 10 % et 70 % et/ou la teneur volumique en deuxièmes particules dans la pièce est compris entre 30 % et 90 %.

15. Procédé selon l'une quelconque des revendications 1 à 14 dans lequel la pièce est une pièce destinée à être utilisée dans une turbomachine aéronautique.

## Patentansprüche

1. Verfahren zur Herstellung eines Teils aus Verbundmaterial, das eine durch eine Keramikmatrix verdichtete Partikelverstärkung umfasst, wobei das Verfahren die folgenden Schritte umfasst:
- Bilden einer Ausgangsform (E4) des herzustellenden Teils durch Formgebung eines Gemisches, das ein Bindemittel, erste Keramik- oder Kohlenstoffpartikel, die dazu bestimmt sind, die Partikelverstärkung des Teils zu bilden, und zweite Keramik- oder Kohlenstoffpartikel umfasst, die sich von den ersten Partikeln unterscheiden,
- Beseitigung oder Pyrolyse des Bindemittels (E5), das sich in der Ausgangsform befindet, um eine poröse Vorform des herzustellenden Teils zu erhalten, und
- Infiltration der Porosität der Vorform (E6) durch eine geschmolzene Zusammensetzung, die ein Metall umfasst, um das Teil zu erhalten,
**dadurch gekennzeichnet, dass** es vor dem Infiltrationsschritt ferner einen Schritt der isostatischen Heißverdichtung der porösen Vorform umfasst, die nach Beseitigung oder Pyrolyse des Bindemittels erhalten wird.

2. Verfahren nach Anspruch 1, wobei die geschmolzene Zusammensetzung Silizium umfasst.

3. Verfahren nach Anspruch 1 oder 2, wobei die ersten Partikel kurze Fasern sind, die eine Länge von zwischen 50 µm und 5000 µm aufweisen.

4. Verfahren nach Anspruch 3, wobei die kurzen Fasern eine Länge von zwischen 100 µm und 300 µm aufweisen.

5. Verfahren nach Anspruch 1 oder 2, wobei die ersten Partikel Körner sind.

6. Verfahren nach einem der Ansprüche 1 bis 5, wobei das mediane Elementarvolumen der ersten Partikel größer oder gleich dem medianen Elementarvolumen der zweiten Partikel ist.

7. Verfahren nach einem der Ansprüche 1 bis 6, wobei die Formgebung des Gemischs die Einspritzung des Gemischs in eine Form umfasst.

8. Verfahren nach Anspruch 7, wobei ein flüssiges Medium, welches das Gemisch umfasst, in die Form eingespritzt wird, wobei die Form mit einer Vorrichtung zur Filterung des flüssigen Mediums ausgestattet ist und der Schritt der Bildung der Ausgangsform ferner die Filterung des flüssigen Mediums durch die Filterungsvorrichtung umfasst.

9. Verfahren nach einem der Ansprüche 1 bis 6, wobei die Formgebung des Gemischs die Anwendung eines Drucks auf das Gemisch umfasst.

10. Verfahren nach Anspruch 9, wobei die Formgebung des Gemischs die isostatische Kaltverdichtung des Gemischs in einer Form umfasst.

11. Verfahren nach einem der Ansprüche 1 bis 10, wobei die ersten Partikel aus Siliziumkarbid sind.

12. Verfahren nach einem der Ansprüche 1 bis 11, wobei die ersten Partikel von einer Phasengrenzfläche bedeckt sind.

13. Verfahren nach einem der Ansprüche 1 bis 12, wobei die zweiten Keramikpartikel ein Material umfassen, das aus den folgenden ausgewählt wird: SiC, MoSi₂, TiSi₂, CoSi₂, ZrSi₂, HfSi₂, ZrB₂, HfB₂, TiB₂ und ihrem Gemisch.

14. Verfahren nach einem der Ansprüche 1 bis 13, wobei der Volumengehalt an ersten Partikeln in dem Teil zwischen 10% und 70% beträgt und/oder der Volumengehalt an zweiten Partikeln in dem Teil zwischen 30% und 90% beträgt.

15. Verfahren nach einem der Ansprüche 1 bis 14, wobei das Teil ein Teil ist, das dazu bestimmt ist, in einer Luftfahrt-Turbomaschine verwendet zu werden.

## Claims

1. A process for manufacturing a composite material part comprising a particulate reinforcement densified by a ceramic matrix, the process comprising the following steps:
- formation of a blank (S4) of the part to be manufactured by shaping a mixture comprising a binder, first ceramic or carbon particles intended to form the particulate reinforcement of the part and second ceramic or carbon particles distinct from the first particles,
- removal or pyrolysis of the binder (S5) present in the blank to obtain a porous preform of the part, and
- infiltration of the porosity of the preform (S6) by a molten composition comprising a metal in order to obtain the part,
**characterized in that** it further comprises, before the infiltration step, a step of hot isostatic compression of the porous preform obtained after removal or pyrolysis of the binder.

2. The process as claimed in claim 1, wherein the molten composition comprises silicon.

3. The process as claimed in claim 1 or 2, wherein the first particles are short fibers having a length comprised between 50 µm and 5000 µm.

4. The process as claimed in claim 3, wherein the short fibers have a length comprised between 100 µm and 300 µm.

5. The process as claimed in claim 1 or 2, wherein the first particles are grains.

6. The process as claimed in any one of claims 1 to 5, wherein the median elementary volume of the first particles is greater than or equal to the median elementary volume of the second particles.

7. The process as claimed in any one of claims 1 to 6, wherein shaping the mixture comprises injecting the mixture into a mold.

8. The process as claimed in claim 7, wherein a liquid medium comprising the mixture is injected into the mold, the mold being equipped with a filtration device for the liquid medium, and the step of forming the blank further comprises the filtration of the liquid medium by the filtration device.

9. The process as claimed in any one of claims 1 to 6, wherein shaping the mixture comprises the application of pressure to the mixture.

10. The process as claimed in claim 9, wherein shaping the mixture comprises cold isostatic compression of the mixture into a mold.

11. The process as claimed in any one of claims 1 to 10, wherein the first particles are silicon carbide.

12. The process as claimed in any one of claims 1 to 11, wherein the first particles are coated with an interphase.

13. The process as claimed in any one of claims 1 to 12, wherein the second ceramic particles comprise a material selected from the following: SiC, MoSi₂, TiSi₂, CoSi₂, ZrSi₂, HfSi₂, ZrB₂, HfB₂, TiB₂, and a mixture thereof.

14. The process as claimed in any one of claims 1 to 13, wherein the volume content of first particles in the part is comprised between 10% and 70% and/or the volume content of second particles in the part is comprised between 30% and 90%.

15. The process as claimed in any one of claims 1 to 14 wherein the part is a part for use in an aeronautical turbomachine.
